# EUROPÄISCHE PATENTSCHRIFT

(11) **EP 3 966 474 B1**
(45) Veröffentlichungstag und Bekanntmachung des Hinweises auf die Patenterteilung: **25.09.2024**
(21) Anmeldenummer: 20722999.8
(22) Anmeldetag: 22.04.2020
(51) Int. Cl.: F16H 57/021, F16H 1/12

(54) **GETRIEBE MIT EINEM GEHÄUSETEIL UND EINER ERSTEN WELLE, INSBESONDERE EINTREIBENDEN WELLE**
TRANSMISSION COMPRISING A HOUSING PART AND A FIRST SHAFT, IN PARTICULAR A DRIVE SHAFT
TRANSMISSION DOTÉE D'UN ÉLÉMENT CARTER ET D'UN PREMIER ARBRE, EN PARTICULIER ARBRE D'ENTRAÎNEMENT

(30) Priorität: 06.05.2019 DE 102019003166
(43) Veröffentlichungstag der Anmeldung: 16.03.2022
(73) Patentinhaber: SEW-EURODRIVE GmbH & Co. KG, 76646 Bruchsal (DE)
(72) Erfinder: TEGELTIJA, Miki, 76689 Karlsdorf-Neuthardt (DE); BÜHN, Oliver, 76703 Kraichtal (DE)
(86) Internationale Anmeldenummer: PCT/EP2020/025184
(87) Internationale Veröffentlichungsnummer: WO 2020/224799

(56) Entgegenhaltungen:
- CN-Y- 2 618 002
- DE-A1- 102012 008 652
- DE-U1- 202006 009 107
- US-A- 1 814 911
- US-A- 3 645 153

## Beschreibung

Die Erfindung betrifft ein Getriebe mit einem Gehäuseteil und einer ersten Welle, insbesondere eintreibenden Welle.

Es ist allgemein bekannt, dass eine Welle mittels in einem Gehäuseteil aufgenommenen Lagern gelagert wird.

Aus der CN 2 618 002 Y ist ein Getriebe mit einer beidseitigen Lagerung einer eintriebseitigen Schnecke bekannt.

Aus der US 3 645 153 A ist ein Differentialgetriebe bekannt.

Aus der DE 20 2006 009107 U1 ist als nächstliegender Stand der Technik ein Getriebe bekannt.

Aus der US 1 814 911 A ist ein Getriebe bekannt.

Aus der DE 10 2012 008652 A1 ist ein Getriebemotor bekannt.

Der Erfindung liegt daher die Aufgabe zugrunde, ein Getriebe stabil auszubilden. Erfindungsgemäß wird die Aufgabe bei dem Getriebe nach den in Anspruch 1 angegebenen Merkmalen gelöst.

Vorteilhafte Ausgestaltungen der Erfindung werden in den abhängigen Ansprüchen definiert.

Von Vorteil ist dabei, dass ein Werkzeug zum Einpressen der ersten

Welle in die Aufnahme des Gehäuseteils, also zum Einpressen der Welle samt dem ersten Lager in eine durch das Gehäuseteil durchgehende Ausnehmung sowie des axialen Endbereichs der Welle in eine sacklochartig ausgeformte Ausnehmung, abgestützt wird.

Somit fungiert der Vorsprung einerseits als Abstützung für die Welle und andererseits als Abstützung für das Einpresswerkzeug, das bei Montage präzise ausgerichtet wird, und somit ein Verkanten der ersten Welle beim Einpressen vermieden werden kann.

Wichtig ist dabei auch, dass das Werkzeug die erste Welle außerhalb des Gehäuseteils berührt und in die Ausnehmung drückt und darüber hinaus das Werkzeug innerhalb des Gehäuseteils auch am Vorsprung Kraft einleitet. Das Werkzeug greift also durch das noch offene Gehäuseteil in dessen Innere ein.

Bei einer vorteilhaften Ausgestaltung ist das erste Lager in einem Wandbereich des Gehäuseteils aufgenommen, durch welchen die erste Welle hindurchragt. Von Vorteil ist dabei, dass das erste Lager in der durch das Gehäuseteil durchgehenden Ausnehmung aufgenommen ist.

Bei einer vorteilhaften Ausgestaltung weist der Vorsprung eine Ausnehmung auf, in welcher das zweite Lager aufgenommen ist. Von Vorteil ist dabei, dass die Ausnehmung auf der vom ersten Lager abgewandten Seite der Ritzelverzahnung angeordnet ist. Somit ist eine Stabilisierung in einfacher Weise ermöglicht.

Bei einer vorteilhaften Ausgestaltung ist die das zweite Lager aufnehmende Ausnehmung des Vorsprungs als Sackloch ausgeführt. Von Vorteil ist dabei, dass die eintreibende, also erste, Welle axial begrenzt ist und somit auch das zweite Lager axial begrenzt ist.

Bei einer vorteilhaften Ausgestaltung ist das zweite Lager als Gleitlager ausgeführt, insbesondere wobei eine auf die erste Welle aufgesteckte Lagerbuchse in der Ausnehmung des Vorsprungs aufgenommen ist,
insbesondere wobei die erste Welle sowie der Vorsprung und somit das Gehäuseteil metallisch ausgeführt sind und die Lagerbuchse aus einem Kunststoff. Von Vorteil ist dabei, dass ein kostengünstiges Lager verwendbar ist und eine einfache Montage ermöglicht ist.

Bei einer alternativen vorteilhaften Ausgestaltung ist das zweite Lager als Wälzlager, insbesondere als Kugellager, ausgeführt. Von Vorteil ist dabei, dass verringerte Reibungsverluste auftreten.

Bei einer vorteilhaften Ausgestaltung ist ein Wellendichtring auf der zur Innenseite zugewandten Seite des ersten Lagers im Gehäuseteil aufgenommen. Von Vorteil ist dabei, dass das erste Lager fettgeschmiert betreibbar ist und das im Innenraum des Getriebes vorhandene Schmieröl nicht zum ersten Lager gelangt und somit auch nicht zum Innenraum des das Getriebe antreibenden Elektromotors.

Bei einer vorteilhaften Ausgestaltung ist innerhalb des von der ersten Verzahnung bezogen auf die Drehachse der zweiten Welle in axialer Richtung überdeckten Umfangswinkelbereich der vom Vorsprung bezogen auf die Drehachse der zweiten Welle überdeckte Radialabstandsbereich radial beabstandet von dem von der zweiten Welle überdeckten Radialabstandsbereich. Von Vorteil ist dabei, dass der Vorsprung von der der abtreibenden Welle beabstandet ist und somit keine Kollision bewirkt wird. Wichtig ist aber auch, dass der Vorsprung die Druckfläche für das Anlegen des Presswerkzeugs bietet und diese Druckfläche von der abtreibenden Welle beabstandet ist.

Bei einer vorteilhaften Ausgestaltung ist das eine erste Verzahnung aufweisende Teil ein Ritzel, wobei die Lagerbuchse einen umlaufenden Kragen aufweist, wobei der Kragen am zum Ritzel zugewandten Endbereich der Lagerbuchse hervorragt, insbesondere in bezogen auf die Drehachse des Ritzels radialer Richtung hervorragt, so dass der Kragen an seiner vom Ritzel abgewandten Seite am Vorsprung anliegt und an seiner dem Ritzel zugewandten Seite an einer Stirnseite des Ritzels anliegt.

Bei einer vorteilhaften Ausgestaltung ist die Lagerbuchse an ihrem den Vorsprung berührenden Oberflächenbereich aufgeraut ausgeführt und/oder weist eine Außenverzahnung auf und/oder ist geriffelt ausgeführt. Von Vorteil ist dabei, dass die Lagerbuchse drehfest mit dem Vorsprung verbunden ist, ohne dass die Lagerbuchse elastisch verspannt werden müsste. Die Drehfestigkeit ist also durch Formschluss erreichbar. Auf diese Weise ist die Lagerung des Ritzels in definierter Weise ausführbar. Denn durch die drehfeste Verbindung der Lagerbuchse mit dem Vorsprung ist gesichert, dass nur der Zapfen an der Lagerbuchse reibt, nicht aber die Lagerbuchse am Vorsprung. Zur weiteren Verbesserung des Formschlusses ist auch die am Kragen zum Vorsprung hin gewandte Seite des Kragens der Lagerbuchse geriffelt oder mit einer Verzahnung ausgeführt.

Bei einer vorteilhaften Ausgestaltung weist die Lagerbuchse eine als Dorn ausgebildete Erhebung auf, welche in in eine an einem Zapfen ausgeformte Vertiefung hineinragt.

Von Vorteil ist, dass ein vorhandenes axiales Spiel des Ritzels samt Zapfen reduzierbar ist. Denn thermisch bedingte Ausdehnungen und Fertigungstoleranzen könnten zu einem Klappern führen. Erfindungsgemäß ist aber ein solche Klappern durch elastisches Vorspannen des Dorns verhinderbar. Denn durch das elastische Vorspannen des Dorns wird das Ritzel zu seinem Wälzlager hingedrückt und somit das Axialspiel vermindert.

Die Erfindung wird nun anhand von schematischen Abbildungen näher erläutert:

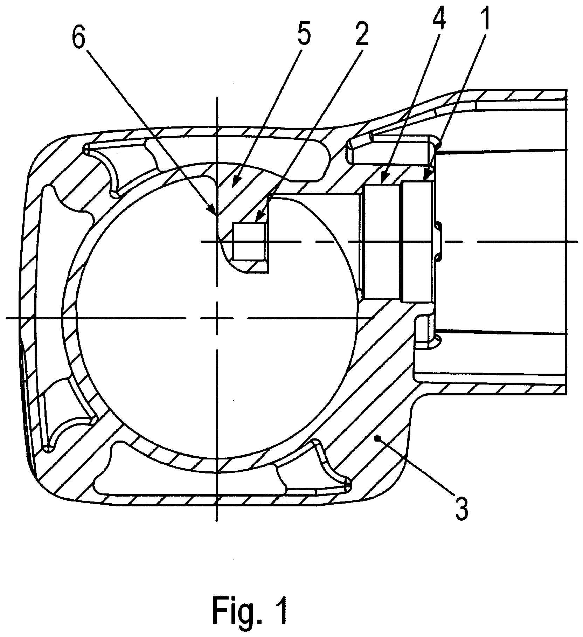

In der Figur 1 ist ein Querschnitt durch ein Gehäuseteil eines Winkelgetriebes gezeigt.

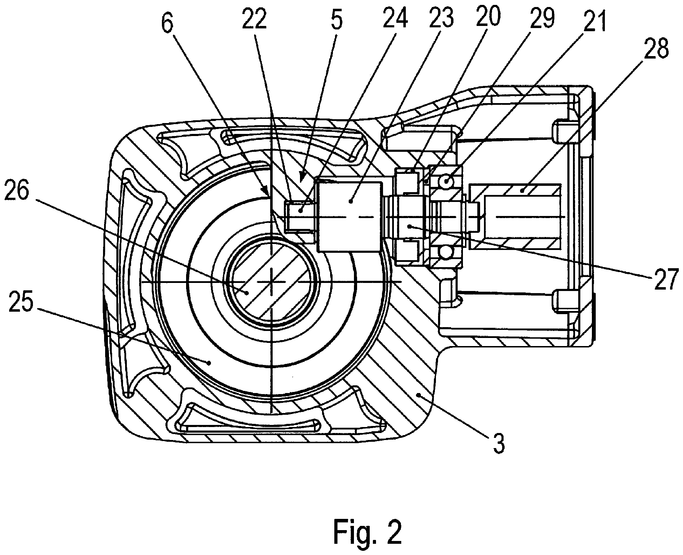

In der Figur 2 ist der Querschnitt durch das zugehörige Getriebe ausgeführt.

Wie in den Figuren dargestellt, weist das Getriebe eine eintreibende Welle 27 auf, welche über ein in einem ersten Lagersitz 1 eines Gehäuseteils des Getriebes aufgenommen ersten Lager 21 drehbar gelagert ist.

Ein Ritzel 23 ist auf die Welle 27 aufgesteckt und drehfest mit ihr verbunden. Alternativ ist die Ritzelverzahnung direkt in einen Wellenabschnitt eingearbeitet, so dass Ritzel 23 und Welle 27 einstückig, also einteilig, ausgeführt sind.

Die eintreibende Welle 27 ist von einem in den Figuren nicht dargestellten Elektromotor antreibbar. Hierzu ist die Rotorwelle des Elektromotors über eine Kupplung 28 drehfest verbindbar mit der eintreibenden Welle 27.

Auf der von der Kupplung 28 axial abgewandten Seite des ersten Lagers 21 dichtet ein Wellendichtring 20 das Gehäuseteil 3 zur eintreibenden Welle 27 hin ab. Dabei ist der Wellendichtring 20 in einem am Gehäuseteil 3 ausgebildeten Wellendichtringsitz aufgenommen.

Der von der Kupplung 28 axial abgewandten Endbereich der eintreibenden Welle 27 ist als Zapfen 24 ausgeformt und in eine Lagerbuchse 22 eingesteckt, die als abstützendes Gleitlager für die eintreibende Welle 27 fungiert.

Hierzu ist diese Lagerbuchse 22 in einer Ausnehmung aufgenommen, welche in einen in den Innenraum des Getriebes hervorragenden Vorsprung 5 des Getriebes eingebracht ist, insbesondere als axial gerichtete Sacklochbohrung.

Vorzugsweise weist die Lagerbuchse einen umlaufenden Kragen, insbesondere Bund, auf, wobei der Kragen am zum Ritzel 23 zugewandten Endbereich radial hervorragt. Somit dient der Kragen nicht nur als axiale Begrenzung für das Einstecken der Lagerbuchse 22 in die Ausnehmung, sondern auch als axialer Anschlag für die der Lagerbuchse 22 zugewandte Stirnseite des Ritzels 23. Auf diese Weise ist ein Anlaufen des Ritzels 23 gegen den Vorsprung 5 verhindert und der Kragen fungiert auch als Schutz gegen das Festfressen der Stirnseite am Vorsprung 5 oder entsprechenden Schädigungen. Die Stirnseite des Ritzels 23 überragt die Lagerbuchse 22 in bezogen auf die Drehachse des Ritzels 23 radialer Richtung, insbesondere für alle Umfangswinkel.

Die Ritzelverzahnung ist im Eingriff mit der Verzahnung eines Rades 25, dessen Drehachse senkrecht zu der Drehachse der eintreibenden Welle 27 ausgerichtet ist, wobei diese beiden Drehachsen voneinander beabstandet sind.

Vorzugsweise bilden die Ritzelverzahnung und das Rad 25 eine Spiroplan- oder Hypoid-Getriebestufe.

Der Vorsprung 5 ragt aus einem ansonsten zylindrisch ausgeformten Innenwandung des Gehäuseteils 3 nach radial innen hervor.

Axial zwischen dem Wellendichtring 20 und dem ersten Lager 21 ist ein Stützring 29 angeordnet, welcher den Wellendichtring 20 axial begrenzt und somit auch stabilisiert und/oder stützt. Der Stützring 29 berührt sowohl den Außenring des ersten Lagers 21 als auch den Wellendichtring 20.

Insbesondere in dem vom Vorsprung 5 in axialer Richtung überdeckten Bereich, umfasst der vom Vorsprung 5 bezogen auf die Drehachse der abtreibenden Welle 26 überdeckte Radialabstandsbereich den von der Ritzelverzahnung bezogen auf die Drehachse der abtreibenden Welle 26 überdeckten Radialabstandsbereich.

Der vom Vorsprung 5 bezogen auf die Drehachse eintreibenden Welle 27 überdeckte Radialabstandsbereich umfasst in einem ersten Umfangswinkelbereich den von der Ritzelverzahnung bezogen auf die Drehachse der eintreibenden Welle 27 überdeckten Radialabstandsbereich. In Umfangsrichtung außerhalb des ersten Umfangswinkelbereichs umfasst der von der Ritzelverzahnung bezogen auf die Drehachse der eintreibenden Welle 27 überdeckte Radialabstandsbereich den vom Vorsprung 5 bezogen auf die Drehachse eintreibenden Welle 27 überdeckten Radialabstandsbereich.

Der Vorsprung 5 ist bezogen auf die Drehachse der eintreibenden Welle 27 in axialer Richtung nur ausgedehnt bis zu einer Ebene, welche die Drehachse der abtreibenden Welle 26 enthält und deren Normale parallel zur Drehachse der eintreibenden Welle 27 ausgerichtet ist.

Der Vorsprung 5 weist eine Druckfläche 6 auf, die in dieser Ebene enthalten ist. Somit ist die Druckfläche 6 an der axialen Endfläche, also Stirnseite, des Vorsprungs 6 angeordnet,
Die Druckfläche 6 wird zum Abstützen eines Presswerkzeuges bei der Montage des Getriebes benutzt, während die eintreibende Welle 27 samt dem zuvor schon auf die Welle aufgesteckten ersten Lagers 21 und der Lagerbuchse 22 eingepresst wird. Auch der Wellendichtring 20 und der Stützring 29 sind auf der Welle 27 aufgesteckt, bevor die Welle 27 samt Lagerbuchse 22 in die Ausnehmung des Vorsprungs eingesteckt wird.

Der Vorsprung 5 ist also derart wenig axial ausgedehnt, dass die Ausnehmung vollständig auf der dem ersten Lager 21 zugewandten Seite der Ebene angeordnet ist. Auf diese Weise ist die Ritzelverzahnung derart zur Planverzahnung des Rades 25 anordenbar, dass ein Spiroplan- oder Hypoid-Winkelgetriebe realisierbar ist.

Die Lagerbuchse 22 bildet zwar den zweiten Lagersitz, ist aber im Wesentlichen zum Abstützen der eintreibenden Welle 27 vorgesehen.

Das Gehäuseteil 3 ist als Gussteil 3 ausgeführt, wobei zumindest die Sitze für das erste Lager 27 und den Wellendichtring 20 fein bearbeitet sind.

Der Vorsprung 5 ist am Gehäuseteil 3 als nach radial innen hervorragende, insbesondere radial hervorragende Auskragung ausgeführt.

Der maximale Radialabstand, also die Hälfte des Außendurchmessers, der abtreibenden Welle 26, ist innerhalb des von der Ritzelverzahnung bezogen auf die abtreibende Welle 26 in axialer Richtung überdeckten Bereichs bezogen auf die abtreibende Welle 26 radial innerhalb des vom Vorsprung 5 überdeckten Radialabstandes. Somit ist die Drehbewegung der abtreibenden Welle nicht durch die Ritzelverzahnung gestört.

Die Verzahnung des Rades 25 ist als Planverzahnung ausgeführt, so dass das Rad 25 als Tellerrad ausgeführt ist. Dabei verlaufen die Zähne der Verzahnung von radial innen nach radial außen bogenförmig

Die eintreibende Welle 27 ist mit der Rotorwelle mittels einer beliebigen Kupplung 28, insbesondere mittels einer drehfesten formschlüssigen Kupplung, verbunden. Vorzugsweise wird eine Oldham-Kupplung verwendet. Es sind aber auch andere in Umfangsrichtung formschlüssige Kupplungen verwendbar.

Bei weiteren erfindungsgemäßen Ausführungsbeispielen ist die Lagerbuchse 22 an ihrem dem Vorsprung 5 zugewandten Oberflächenbereich geriffelt, aufgeraut oder mit einer Verzahnung ausgeführt. Insbesondere ist die Ausnehmung des Vorsprungs mit einer Innenverzahnung und/oder geriffelt ausgeführt. In Weiterbildung ist aber zusätzlich ein dem Kragen zugewandte Oberflächenbereich des Vorsprungs 5 geriffelt oder mit einer Verzahnung ausgeführt. Auf diese Weise eine verbesserte Verdrehsicherung der Lagerbuchse 22 in der Ausnehmung und/oder am Vorsprung 5 erreichbar.

Bei weiteren erfindungsgemäßen Ausführungsbeispielen weist die Lagerbuchse an ihrem topfförmigen Boden einen hervorragenden Dorn auf, der in eine am Zapfen ausgebildete Vertiefung drückt. Durch die geringe Relativgeschwindigkeit zwischen Dorn und Vertiefungen werden hier nur kleine Verlustleistungen erzeugt. Insbesondere bei Herstellung der Lagerbuchse aus Bronze wird hier eine lange Standzeit ermöglicht.

Bei weiteren erfindungsgemäßen Ausführungsbeispielen wird statt des mittels der aus einem weichen Material, wie Kunststoff, Bronze oder Teflon, gefertigten Lagerbuchse 22 ein Wälzlager als zweites Lager für die eintreibende Welle in die Ausnehmung des Vorsprungs 6 eingesetzt. Somit sind niedrigere Reibungsverluste bewirkt.

### Bezugszeichenliste

1 erster Lagersitz
2 zweiter Lagersitz
3 Gehäuseteil
4 Wellendichtringsitz
5 Vorsprung, insbesondere Auskragung
6 Druckfläche für Werkzeug
20 Wellendichtring
21 erstes Lager
22 Lagerbuchse, insbesondere zweites Lager
23 Ritzel
24 Zapfen
25 Rad, insbesondere Tellerrad
26 abtreibende Welle
27 eintreibende Welle
28 Kupplung, insbesondere drehfeste formschlüssige Kupplung zur Rotorwelle hin
29 Stützring

## Patentansprüche

1. Getriebe mit einem Gehäuseteil (3) und einer ersten Welle (27), insbesondere eintreibenden Welle, sowie einem ersten Lager (21), einem zweiten Lager und einem eine erste Verzahnung aufweisenden Teil, insbesondere Ritzel (23),
wobei die erste Welle (27) mittels des ersten Lagers (21) und des von dem ersten Lager (21) beabstandeten zweiten Lagers drehbar gelagert ist,
wobei die erste Welle (27) mit dem die erste Verzahnung aufweisenden Teil, insbesondere Ritzel (23), drehfest verbunden ist,
wobei die erste Verzahnung bezogen auf die Drehachse der ersten Welle (27) in axialer Richtung zwischen dem ersten und dem zweiten Lager (21) angeordnet ist,
wobei am Gehäuseteil (3), insbesondere einstückig, ein nach radial innen hervorragender Vorsprung (5), insbesondere Auskragung, ausgeformt ist,
wobei das zweite Lager im Vorsprung (5) aufgenommen ist,
wobei eine zweite Welle (26) mittels zweier im Gehäuseteil (3) aufgenommener Lager drehbar gelagert ist,
wobei die zweite Welle (26) eine weitere Verzahnung aufweist oder mit einem eine weitere Verzahnung aufweisenden Teil drehfest verbunden ist,
wobei die weitere Verzahnung mit der ersten Verzahnung im Eingriff ist,
**dadurch gekennzeichnet, dass**
der Vorsprung (5) eine ebene Fläche aufweist,
wobei die die ebene Fläche enthaltende Ebene die Drehachse der zweiten Welle (26) enthält und die Normalenrichtung der Ebene parallel zur Drehachse der ersten Welle (27) ausgerichtet ist.

2. Getriebe nach Anspruch 1,
**dadurch gekennzeichnet, dass**
das erste Lager (21) in einem Wandbereich des Gehäuseteils (3) aufgenommen ist, durch welchen die erste Welle (27) hindurchragt.

3. Getriebe nach einem der vorangegangenen Ansprüche,
**dadurch gekennzeichnet, dass**
der Vorsprung (5) eine Ausnehmung aufweist, in welcher das zweite Lager aufgenommen ist.

4. Getriebe nach Anspruch 3,
**dadurch gekennzeichnet, dass**
die das zweite Lager aufnehmende Ausnehmung des Vorsprungs (5) als Sackloch ausgeführt ist.

5. Getriebe nach einem der vorangegangenen Ansprüche,
**dadurch gekennzeichnet, dass**
das zweite Lager als Gleitlager ausgeführt ist.

6. Getriebe nach einem der Ansprüche 1 bis 4,
**dadurch gekennzeichnet, dass**
das zweite Lager als Wälzlager, insbesondere als Kugellager, ausgeführt ist.

7. Getriebe nach einem der vorangegangenen Ansprüche,
**dadurch gekennzeichnet, dass**
ein Wellendichtring (20) auf der zur Innenseite zugewandten Seite des ersten Lagers (21) im Gehäuseteil (3) aufgenommen ist.

8. Getriebe nach einem der vorangegangenen Ansprüche,
**dadurch gekennzeichnet, dass** innerhalb des von der ersten Verzahnung bezogen auf die Drehachse der zweiten Welle (26) in axialer Richtung überdeckten Umfangswinkelbereichs
der vom Vorsprung (5) bezogen auf die Drehachse der zweiten Welle (26) überdeckte Radialabstandsbereich radial beabstandet ist von dem von der zweiten Welle (26) überdeckten Radialabstandsbereich.

9. Getriebe nach Anspruch 5,
**dadurch gekennzeichnet, dass**
eine auf die erste Welle (27) aufgesteckte Lagerbuchse (22) des zweiten Lagers in der Ausnehmung des Vorsprungs (5) aufgenommen ist,
insbesondere wobei die erste Welle (27) sowie der Vorsprung (5) und somit das Gehäuseteil (3) metallisch ausgeführt sind und die Lagerbuchse (22) aus Bronze oder aus einem Kunststoff, insbesondere aus einem faserverstärkten Duroplast, oder aus Teflon.

10. Getriebe nach Anspruch 9,
**dadurch gekennzeichnet, dass**
das eine erste Verzahnung aufweisende Teil ein Ritzel (23) ist, wobei
die Lagerbuchse (22) einen umlaufenden Kragen aufweist,
wobei der Kragen am zum Ritzel (23) zugewandten Endbereich der Lagerbuchse (22) hervorragt, insbesondere in bezogen auf die Drehachse des Ritzels (23) radialer Richtung hervorragt, so dass der Kragen an seiner vom Ritzel (23) abgewandten Seite am Vorsprung (5) anliegt und an seiner dem Ritzel (23) zugewandten Seite an einer Stirnseite des Ritzels (23) anliegt.

11. Getriebe nach Anspruch 9 oder 10,
**dadurch gekennzeichnet, dass**
das eine erste Verzahnung aufweisende Teil ein Ritzel (23) ist, wobei eine oder die Stirnseite des Ritzels (23) flächig an einem oder dem Kragen der Lagerbuchse (22) anliegt.

12. Getriebe nach Anspruch 11,
**dadurch gekennzeichnet, dass**
die Lagerbuchse (22) an ihrem den Vorsprung (5) berührenden Oberflächenbereich aufgeraut ausgeführt ist und/oder eine Außenverzahnung aufweist und/oder geriffelt ausgeführt ist.

13. Getriebe nach einem der Ansprüche 9 bis 12,
**dadurch gekennzeichnet, dass**
die Lagerbuchse (22) an einem mit dem Ritzel (23) verbundenen Zapfen (24) eine als Dorn ausgebildete Erhebung aufweist, welche in eine an dem Zapfen (24) ausgeformte Vertiefung hineinragt.

## Claims

1. A gear unit having a housing part (3) and a first shaft (27), in particular input shaft, and also a first bearing (21), a second bearing and a part having a first gearing, in particular pinion (23),
wherein the first shaft (27) is rotatably mounted by means of the first bearing (21) and the second bearing which is spaced apart from the first bearing (21),
wherein the first shaft (27) is connected non-rotatably to the part having the first gearing, in particular pinion (23),
wherein the first gearing, relative to the axis of rotation of the first shaft (27), is arranged in the axial direction between the first and the second bearing (21),
wherein a projection (5), in particular protrusion, protruding radially inwards is formed on the housing part (3), in particular in one piece,
wherein the second bearing is received in the projection (5),
wherein a second shaft (26) is rotatably mounted by means of two bearings received in the housing part (3),
wherein the second shaft (26) has a further gearing or is connected non-rotatably to a part having a further gearing,
wherein the further gearing is engaged with the first gearing,
**characterised in that**
the projection (5) has a flat face,
with the plane which contains the flat face containing the axis of rotation of the second shaft (26)
and the normal direction of the plane being oriented parallel to the axis of rotation of the first shaft (27).

2. A gear unit according to claim 1,
**characterised in that**
the first bearing (21) is received in a wall region of the housing part (3) through which the first shaft (27) protrudes.

3. A gear unit according to one of the preceding claims,
**characterised in that**
the projection (5) has a cutout in which the second bearing is received.

4. A gear unit according to claim 3,
**characterised in that**
the cutout in the projection (5) which receives the second bearing is embodied as a blind hole.

5. A gear unit according to one of the preceding claims,
**characterised in that**
the second bearing is embodied as a plain bearing.

6. A gear unit according to one of claims 1 to 4,
**characterised in that**
the second bearing is embodied as a rolling bearing, in particular as a ball bearing.

7. A gear unit according to one of the preceding claims,
**characterised in that**
a shaft sealing ring (20) is received in the housing part (3) on that side of the first bearing (21) which faces the inner side.

8. A gear unit according to one of the preceding claims,
**characterised in that**
within the angle-at-circumference region covered by the first gearing relative to the axis of rotation of the second shaft (26) in the axial direction, the radial clearance region covered by the projection (5) relative to the axis of rotation of the second shaft (26) is radially spaced apart from the radial clearance region covered by the second shaft (26).

9. A gear unit according to claim 5,
**characterised in that**
a bearing bush (22) of the second bearing which is mounted on the first shaft (27) is received in the cutout in the projection (5),
in particular with the first shaft (27) and also the projection (5) and hence the housing part (3) being made metallic and the bearing bush (22) being made of bronze or of a plastics material, in particular of a fibre-reinforced thermoset material, or of Teflon.

10. A gear unit according to claim 9,
**characterised in that**
the part which has a first gearing is a pinion (23), with the bearing bush (22) having a circumambient collar,
the collar protruding at that end region of the bearing bush (22) which faces the pinion (23), in particular protruding in the radial direction relative to the axis of rotation of the pinion (23), so that the collar on its side which faces away from the pinion (23) rests against the projection (5) and on its side which faces the pinion (23) rests against an end face of the pinion (23).

11. A gear unit according to claim 9 or 10,
**characterised in that**
the part which has a first gearing is a pinion (23), with a or the end face of the pinion (23) resting with its face against a or the collar of the bearing bush (22).

12. A gear unit according to claim 11,
**characterised in that**
the bearing bush (22) is embodied roughened on its surface region which contacts the projection (5) and/or has external gearing and/or is embodied fluted.

13. A gear unit according to one of claims 9 to 12,
**characterised in that**
the bearing bush (22) on a journal (24) connected to the pinion (23) has an elevation formed as a mandrel, which protrudes into an indentation formed on the journal (24).

## Revendications

1. Transmission avec une partie carter (3) et un premier arbre (27), en particulier un arbre d'entraînement, ainsi qu'un premier palier (21), un second palier et une partie présentant une première denture, en particulier un pignon (23),
le premier arbre (27) étant monté rotatif au moyen du premier palier (21) et du second palier espacé par rapport au premier palier (21),
le premier arbre (27) étant relié de manière solidaire en rotation à la partie présentant la première denture, en particulier le pignon (23),
la première denture étant agencée entre le premier et le second palier (21) dans la direction axiale par rapport à l'axe de rotation du premier arbre (27),
une saillie (5), en particulier une saillie en porte-à-faux, qui fait saillie radialement vers l'intérieur étant formée sur la partie carter (3), en particulier d'un seul tenant,
le second palier étant logé dans la saillie (5)
un second arbre (26) étant monté rotatif au moyen de deux paliers accueillis dans la partie carter (3),
le second arbre (26) présentant une denture supplémentaire ou étant relié de manière solidaire en rotation à une partie présentant une denture supplémentaire,
la denture supplémentaire venant en prise avec la première denture,
**caractérisée en ce que**
la saillie (5) présente une surface plane,
le plan qui contient la surface plane contenant l'axe de rotation du second arbre (26) et la direction normale du plan étant orientée parallèlement à l'axe de rotation du premier arbre (27).

2. Transmission selon la revendication 1,
**caractérisée en ce que**
le premier palier (21) est logé dans une région de paroi de la partie carter (3) à travers laquelle passe le premier arbre (27).

3. Transmission selon l'une quelconque des revendications précédentes,
**caractérisée en ce que**
la saillie (5) présente un évidement dans lequel est logé le second palier.

4. Transmission selon la revendication 3,
**caractérisée en ce que**
l'évidement, qui accueille le second palier, de la saillie (5) est réalisé sous la forme d'un trou borgne.

5. Transmission selon l'une quelconque des revendications précédentes,
**caractérisée en ce que**
le second palier est réalisé sous la forme d'un palier lisse.

6. Transmission selon l'une quelconque des revendications 1 à 4,
**caractérisée en ce que**
le second palier est réalisé sous la forme d'un palier à roulement, en particulier sous la forme d'un palier à billes.

7. Transmission selon l'une quelconque des revendications précédentes,
**caractérisée en ce que**
une bague d'étanchéité d'arbre (20) est logée dans la partie carter (3) du côté du premier palier (21) qui est tourné vers l'intérieur.

8. Transmission selon l'une quelconque des revendications précédentes,
**caractérisée en ce que**
à l'intérieur de la région angulaire périphérique recouverte par la première denture dans la direction axiale par rapport à l'axe de rotation du second arbre (26), la région d'espacement radial recouverte par la saillie (5) par rapport à l'axe de rotation du second arbre (26) est espacée radialement par rapport à la région d'espacement radial recouverte par le second arbre (26).

9. Transmission selon la revendication 5,
**caractérisée en ce que**
une douille de palier (22) du second palier, enfichée sur le premier arbre (27), est logée dans l'évidement de la saillie (5),
le premier arbre (27) ainsi que la saillie (5) et donc la partie carter (3) étant en particulier métalliques et la douille de palier (22) étant en particulier en bronze ou en plastique, en particulier en plastique thermodurcissable renforcé defibres, ou en téflon.

10. Transmission selon la revendication 9,
**caractérisée en ce que**
la partie présentant une première denture est un pignon (23),
la douille de palier (22) présentant une collerette périphérique,
la collerette faisant saillie au niveau de la région d'extrémité, tournée vers le pignon (23), de la douille de palier (22), en particulier dans la direction radiale par rapport à l'axe de rotation du pignon (23), de sorte que la collerette, au niveau de son côté détourné du pignon (23), repose sur la saillie (5) et, au niveau de son côté tourné vers le pignon (23), repose sur une face frontale du pignon (23).

11. Transmission selon la revendication 9 ou 10,
**caractérisée en ce que**
la partie présentant une première denture est un pignon (23),
une, ou la, face frontale du pignon (23) reposant à plat sur une, ou la, collerette de la douille de palier (22).

12. Transmission selon la revendication 11,
**caractérisée en ce que**
la douille de palier (22) est réalisée de manière rugueuse au niveau de sa région de surface en contact avec la saillie (5) et/ou présente une denture extérieure et/ou est réalisée de manière cannelée.

13. Transmission selon l'une quelconque des revendications 9 à 12,
**caractérisée en ce que**
la douille de palier (22) présente, au niveau d'un tourillon (24) relié au pignon (23), une éminence réalisée en forme de dôme et qui pénètre dans un renfoncement formé au niveau du tourillon (24).
